# DEMANDE DE BREVET EUROPEEN

(11) **EP 1 744 483 A1**
(43) Date de publication de la demande: **17.01.2007**
(21) Numéro de dépôt: 06291055.9
(22) Date de dépôt: 26.06.2006
(51) Int. Cl.: H04L 5/18

(54) **Interface de type PCM**

(30) Priorité: 11.07.2005 FR 0507392
(71) Demandeur: STMicroelectronics SA, 92120 Montrouge (FR); STMicroelectronics S.r.l., 20041 Agrate Brianza (Milano) (IT)
(72) Inventeur: Ianos, Anca Marina, 38000 Grenoble (FR); Pesenti, Paolo, Agrate (MI) (IT)
(74) Mandataire: Garel, Régis

(57) **Abrégé**

Un dispositif d'interface (30) comprend une première et une seconde bornes de données (A,B) adaptées pour la communication de données en mode duplex, avec en permanence une des première et une seconde bornes de données affectée à chaque sens de communication. Les première et seconde bornes de données sont configurables en fonctionnement de telle manière que, dans un premier mode de fonctionnement, la première borne de données (A) soit adaptée pour émettre (PCM_Tx) mais pas pour recevoir des données et la seconde borne de données (B) soit adaptée recevoir (PCM_Rx) mais pas pour émettre des données, alors que, dans un second mode de fonctionnement, la première borne de données (A) soit adaptée pour recevoir (PCM_Rx) mais pas pour émettre des données et la seconde borne de données (B) soit adaptée pour émettre (PCM_Tx) mais pas pour recevoir des données.

## Description

La présente invention concerne les interfaces de type PCM (de l'anglais "Pulse Code Modulation", le terme français correspondant étant MIC : "Modulation par Impulsion Codée").

La PCM est une méthode de codage et de multiplexage synchrone, par laquelle des signaux audio sont représentés sous forme d'un signal de données numériques multiplexé par accès multiple à répartition dans le temps (AMRT). Un signal PCM est donc un signal numérique obtenu par multiplexage temporel d'une pluralité de signaux analogiques de type voix, échantillonnés à partir d'une même référence d'échantillonnage.

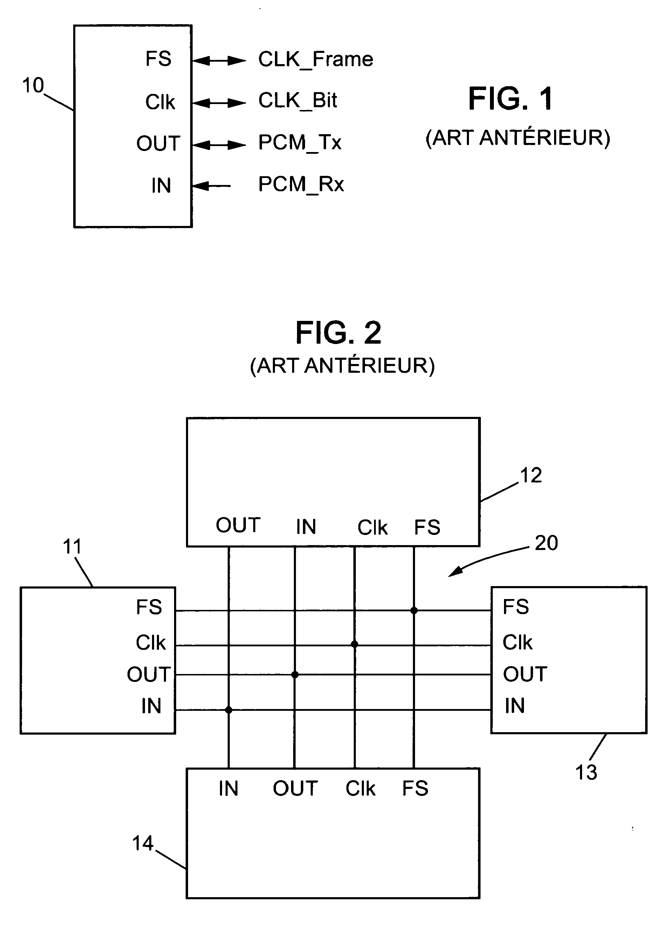

En référence à la figure 1, une interface PCM d'une unité fonctionnelle 10, comprend, selon l'art antérieur:
- une première borne d'horloge Clk et une seconde borne d'horloge FS, adaptées chacune pour recevoir ou émettre, respectivement, un signal d'horloge de synchronisation au niveau bit CLK_Bit et un signal d'horloge de synchronisation au niveau trame CLK_Frame; et,
- une borne d'entrée de données IN et une borne de sortie de données OUT adaptées pour, respectivement, recevoir un signal de données PCM_Rx et émettre un signal de données PCM_Tx en mode duplex.

Dans les applications de téléphonie, le spectre audio considéré comme significatif correspond à la bande 300-3400 Hz. Sachant que la fréquence d'échantillonnage doit être supérieure à deux fois la fréquence maximum de cette bande (théorème de Shannon), la valeur de la fréquence d'échantillonnage retenue est typiquement 8 kHz. Donc la durée entre deux échantillons successifs d'un canal audio (aussi appelé voie audio), est égale à 125 µs. La fréquence du signal d'horloge de synchronisation au niveau trame CLK_Frame est égale à la fréquence d'échantillonnage des signaux audio. De cette manière, on a un échantillon d'un canal audio donné par trame.

Si un échantillon d'un signal audio est codé sur 8 bits, à 64 Kilobits/canal, la fréquence du signal d'horloge de synchronisation au niveau bit CLK_Bit est alors égale à Nx64 kHz, où N est le nombre de canaux multiplexés par AMRT à l'intérieur d'une trame, c'est-à-dire dans une période du signal d'horloge de synchronisation au niveaux trame CLK_Frame. On appelle intervalle de temps (IT), la fraction d'une trame allouée à un canal donné. Dans le système européen normalisé par le CCITT (Avis G732), N est égal à 32 (on parle de "MIC à 32 voies"), en sorte que la fréquence du signal CLK_Bit est égale à 2,048 MHz. On a ainsi, par trame, 30 voies téléphoniques (IT numéros 1 à 15 et 17 à 30), 1 voie de signalisation (IT numéro 16) pour transmettre de la signalisation en mode sémaphore ou en mode voie par voie, et une voie de synchronisation (IT numéro 0) pour transmettre un mot de verrouillage de trame.

La grande disponibilité, et à faible coût, de divers circuits d'interface PCM fait que pratiquement tous les systèmes audio apparus ces dernières décennies utilisent la PCM, même si on tend actuellement à lui préférer le format du standard I²S (Inter-IC Sound), qui permet la transmission de données audio (notamment de la musique) en stéréo.

Dans les interfaces PCM standard, en général, les bornes d'horloge Clk et FS sont réversibles, de telle manière que l'unité 10 délivre les signaux d'horloge respectivement CLK_Bit et CLK_Frame, ou qu'elle les reçoive de l'extérieur, via ces deux bornes. Dans le premier cas, on dit que l'unité 10 est une unité de type maître. Dans le second cas, on dit que l'unité 10 est une unité de type esclave. Le type, maître ou esclave, des unités fonctionnelles d'un système peut ainsi être configuré en fonction de l'application.

A un instant donné l'unité 10 peut recevoir un signal de données PCM_Rx via la borne IN, et émettre un signal de données PCM_Tx via la borne OUT. La communication de données a donc lieu en mode duplex. Par contre, la fonction des bornes IN et OUT est figée.

En référence à la figure 2, un système électronique comprend par exemple plusieurs unités fonctionnelles 11 à 14 communiquant entre elles en utilisant la PCM, et ayant chacune une interface PCM standard. Les interfaces PCM sont couplées par l'intermédiaire d'un réseau de connexion 20 figé, c'est-à-dire non configurable en fonctionnement. Un tel réseau de connexion comprend des liaisons point à multipoint. L'une seulement des unités fonctionnelles est de type maître, ses entrées d'horloge Clk et FS étant adaptées pour émettre respectivement le signal d'horloge CLK_Bit et le signal d'horloge CLK_Frame. Les autres sont des unités de type esclave, avec leurs entrées d'horloge Clk et FS adaptées pour recevoir, respectivement, le signal d'horloge CLK_Bit et le signal d'horloge CLK_Frame.

Dans l'exemple représenté à la figure 2, l'unité 12, qui peut par exemple être l'unité de type maître, peut émettre des données à destination de chacune des unités 11, 13, et 14 (sa sortie OUT est reliée à l'entrée IN de chacune de ces trois unités). De même, elle peut recevoir des données de chacune de ces trois unités (son entrée IN est reliée à la sortie OUT de chacune de ces trois unités).

Par contre, les unités fonctionnelles 11, 13 et 14 ne peuvent échanger directement des données entre elles sans générer un conflit de transmission (leurs entrées IN respectives sont couplées ensemble, et leurs sorties OUT respectives sont couplées ensemble). En pratique, lorsque, par exemple, l'unité 11 veut échanger des données avec l'unité 13, ces deux unités communiquent indirectement par l'intermédiaire de l'unité 12.

Cela génère des retards de transmission, nécessite de prévoir des moyens supplémentaires dans l'unité fonctionnelle 12 (notamment des mémoires tampons), et nécessite par ailleurs des moyens de commande plus complexes pour faire fonctionner le système selon les différents scénarii d'utilisation possibles.

L'invention vise à remédier à cet inconvénient de l'art antérieur, en proposant un nouveau type d'interface PCM.

Un premier aspect de l'invention se rapporte ainsi à un dispositif d'interface adapté pour la communication de données en mode duplex et comprenant une première et une seconde bornes de données, avec en permanence une des première et seconde bornes de données affectée à chaque sens de communication. Les première et seconde bornes de données sont configurables en fonctionnement de telle manière que, dans un premier mode de fonctionnement, la première borne de données soit adaptée pour émettre mais pas pour recevoir des données et la seconde borne de données soit adaptée recevoir mais pas pour émettre des données, alors que, dans un second mode de fonctionnement, la première borne de données soit adaptée pour recevoir mais pas pour émettre des données et la seconde borne de données soit adaptée pour émettre mais pas pour recevoir des données.

Ainsi, la communication de données a toujours lieu en mode duplex mais la fonction des première et une seconde bornes de données n'est pas figée. Certes, à chaque instant une des première et seconde bornes de données est affectée à chaque sens de communication, mais la fonction respective de chacune d'elles (réception ou émission de données) peut changer au cours du temps.

Dans un mode de réalisation, dans lequel les données sont reçues ou émises sous forme de trames comprenant chacune une pluralité de canaux logiques multiplexés par AMRT respectivement associés à des intervalles de temps, les première et seconde bornes de données sont configurables avec une agilité suffisante pour passer du premier mode de fonctionnement au second mode de fonctionnement, ou réciproquement, d'un intervalle de temps à un autre. Cela donne la plus grande souplesse possible dans la gestion des cas d'utilisation, en fonction des besoins de communication entre des unités fonctionnelles ayant des interfaces de ce type.

Dans un mode de réalisation, l'interface comprend en outre une borne d'horloge de synchronisation au niveau trame pour recevoir ou émettre un signal d'horloge de synchronisation au niveau trame, et une borne d'horloge de synchronisation au niveau bit pour recevoir ou émettre un signal d'horloge de synchronisation au niveau bit. Cela permet la communication synchrone entre des unités fonctionnelles ayant des interfaces de ce type, l'une des interfaces pouvant être de type maître, et l'autre ou les autres pouvant être de type esclave.

Dans un exemple d'application, le dispositif d'interface peut être adapté pour la communication de données au format PCM.

Un deuxième aspect de l'invention se rapporte à un dispositif électronique (ou unité fonctionnelle) comprenant une interface selon le premier aspect, ainsi qu'un premier groupe de N registres de données et un second groupe de N registres de données, respectivement pour stocker des données reçues de N autres dispositifs électroniques respectifs et pour stocker des données à émettre vers ces N autres dispositifs électroniques respectifs.

Lorsque les données sont reçues ou émises sous la forme des trames précitées, les données stockées dans les N registres de données du premier groupe, respectivement du second groupe, peuvent être reçues, respectivement émises, dans N intervalles de temps respectifs d'une trame.

Un troisième aspect de l'invention se rapporte à un système électronique comprenant une pluralité de dispositifs électroniques selon le deuxième aspect, couplés entre eux par l'intermédiaire d'un réseau de connexion figé, c'est-à-dire non configurable en fonctionnement.

Un quatrième aspect de l'invention se rapporte à un téléphone portable comprenant un système électronique selon le troisième aspect.

Enfin, un cinquième aspect de l'invention se rapporte à un procédé de communication de données en mode duplex, mis en oeuvre au niveau d'un dispositif électronique par l'intermédiaire d'une interface adaptée pour la communication de données en mode duplex et comprenant une première et une seconde bornes de données, avec en permanence une des première et une seconde bornes de données affectée à chaque sens de communication. Le procédé comprend la configuration en fonctionnement des première et seconde bornes de données de telle manière que, dans un premier mode de fonctionnement, la première borne de données soit adaptée pour émettre mais pas pour recevoir des données et la seconde borne de données soit adaptée recevoir mais pas pour émettre des données, alors que, dans un second mode de fonctionnement, la première borne de données soit adaptée pour recevoir mais pas pour émettre des données et la seconde borne de données soit adaptée pour émettre mais pas pour recevoir des données.

Dans un mode de mise en oeuvre du procédé, dans lequel les données sont reçues ou émises sous forme de trames comprenant chacune une pluralité de canaux logiques multiplexés par AMRT respectivement associés à des intervalles de temps, les première et seconde bornes de données peuvent être configurées avec une agilité suffisante pour passer du premier mode de fonctionnement au second mode de fonctionnement, ou réciproquement, d'un intervalle de temps à un autre.

Dans un mode de mise en oeuvre, des données reçues de N autres dispositifs électroniques sont stockées dans N registres de données respectifs d'un premier groupe de registres, et des données à émettre vers lesdits N autres dispositifs électroniques sont stockées dans N registres de données respectifs d'un second groupe de registres.

Les données reçues, respectivement émises, dans N intervalles de temps respectifs d'une trame, peuvent être stockées dans les N registres de données du premier groupe, respectivement du second groupe.

L'invention permet donc d'augmenter le nombre des scenarii d'utilisation possibles dans un système comprenant plus de deux unités fonctionnelles reliées entre elles par un réseau d'interconnexion figé pour échanger des données en mode duplex.

L'invention est particulièrement avantageuse et innovante dans le cadre des interfaces PCM. Néanmoins, elle peut s'appliquer à tout type d'interface pour l'échange de données en mode duplex selon un protocole à au moins deux fils (un pour chaque sens de communication des données).

D'autres caractéristiques et avantages de l'invention apparaîtront encore à la lecture de la description qui va suivre. Celle-ci est purement illustrative et doit être lue en regard des dessins annexés sur lesquels :
- la figure 1 est un schéma simplifié d'une unité fonctionnelle ayant une interface PCM selon l'art antérieur ;
- la figure 2 est un schéma d'un exemple de système comprenant des unités fonctionnelles ayant chacune une interface PCM, et connectées entre elles par un réseau d'interconnexion figé ;
- les figures 3 et 4 sont des chronogrammes illustrant le principe de la transmission de données au format PCM respectivement dans un cas où chaque trame PCM comprend une ou N canaux logiques multiplexés ;
- la figure 5 est un schéma simplifié d'une unité fonctionnelle ayant une interface PCM selon la présente invention ;
- la figure 6 est un schéma du système de la figure 2 réalisé avec des unités fonctionnelles ayant des interfaces PCM selon la présente invention ;
- la figure 7 est un schéma plus détaillé d'un exemple de réalisation d'une interface PCM selon la présente invention ; et,
- les figures 8 à 11 sont des schémas illustrant diverses autres configurations d'utilisation du système de la figure 6.

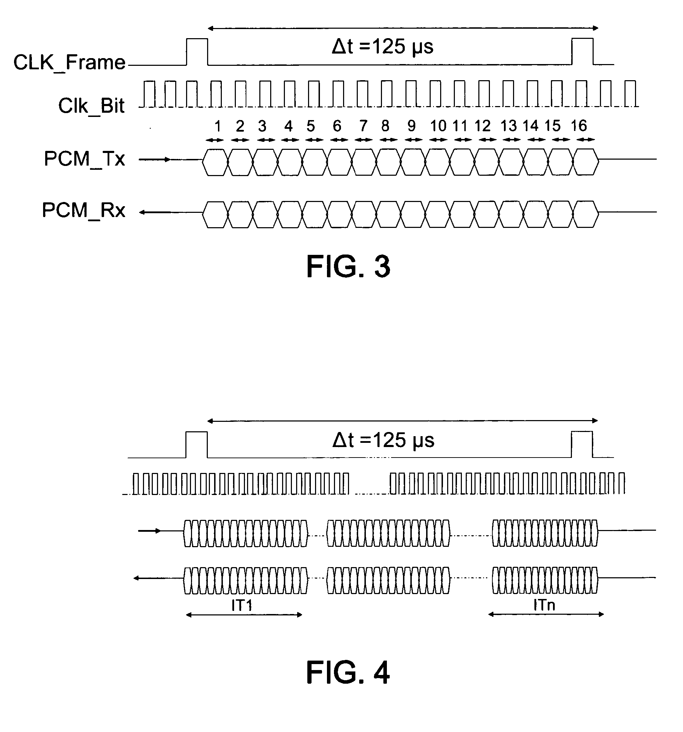

A la figure 3, on a représenté des chronogrammes des signaux CLK_Frame, CLK_Bit, PCM_Tx et PCM_Rx, l'un en dessous de l'autre, dans le cas d'un signal PCM monocanal. Dans cet exemple, chaque échantillon du signal est codé sur 16 bits. Les 16 bits d'un échantillon du signal PCM_Tx ou PCM_Rx sont transmis entre deux impulsions du signal d'horloge CLK_Frame, c'est-à-dire pendant la durée Δt d'un cycle de l'horloge CLK_Frame.

Dans le cas où la fréquence du signal CLK_Frame est égale à 8 kHz, c'est-à-dire quand Δt égal 125 µs, la fréquence du signal CLK_Bit pour un tel signal monocanal, peut être égal à 128 kHz. Sur la figure, les numéros 1 à 16 se rapportent aux 16 bits d'un échantillon successivement transmis pendant la période Δt.

A la figure 4, on a représenté les mêmes chronogrammes qu'à la figure 3, avec toujours une fréquence du signal CLK_Frame égal à 8 kHz et avec 16 bits par échantillon, mais dans le cas d'un signal PCM à N canaux.

Dans ce cas, la période Δt entre deux impulsions du signal CLK_Frame est partagée en N intervalles de temps, ici noté IT1 à ITn, dans chacun desquels on transmet les 16 bits codant un échantillon d'une voie audio déterminée. Dit autrement, la période de temps Δt correspond à une trame comprenant N intervalles de temps IT1 à ITn respectivement associés à N voies audio multiplexées par AMRT. La fréquence du signal d'horloge CLK_Bit est alors égale à N x 8 kHz.

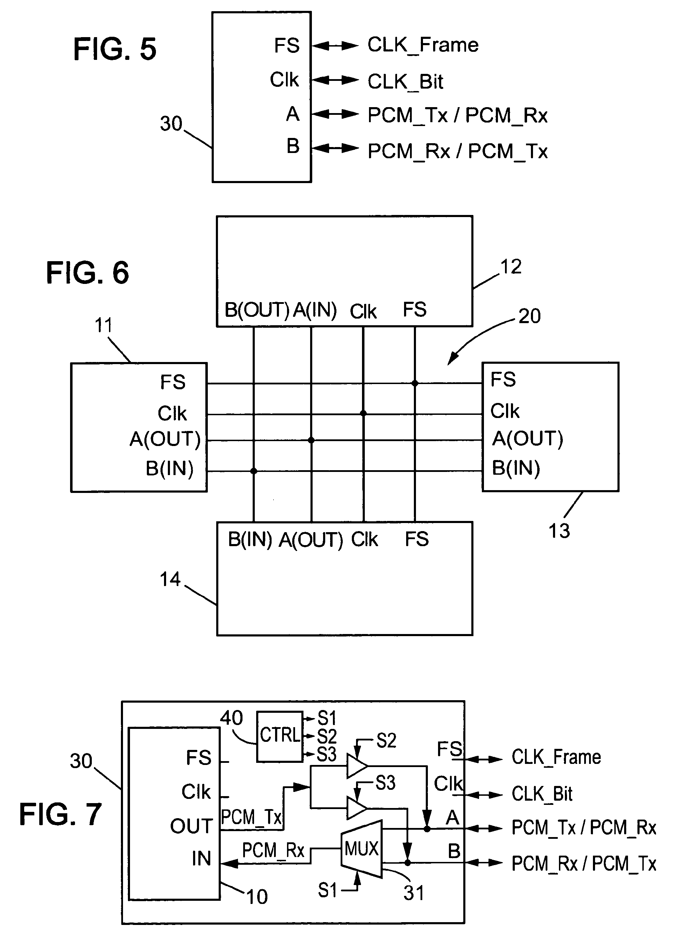

En référence à la figure 5, une représentation schématique d'une interface PCM selon un exemple de réalisation de la présente invention comprend, en plus des bornes d'horloge FS et Clk identiques à celles de l'interface 10 de la figure 1, des bornes d'entrée/sortie de données A et B remplaçant la borne d'entrée IN et la borne de sortie OUT de l'interface 10 de la figure 1. Les bornes A et B sont réversibles, et configurables en fonctionnement de manière que dans un premier mode de fonctionnement, la première borne de données soit adaptée pour émettre mais pas pour recevoir des données PCM et la seconde borne de données soit adaptée recevoir mais pas pour émettre des données PCM, alors que, dans un second mode de fonctionnement, la première borne de données soit adaptée pour recevoir mais pas pour émettre des données PCM et la seconde borne de données soit adaptée pour émettre mais pas pour recevoir des données PCM. Dit autrement, soit la borne A reçoit le signal PCM_Rx alors que la borne B émet le signal PCM_Tx, soit la borne A émet le signal PCM_Tx alors que la borne B reçoit le signal PCM_Rx.

Par convention, les bornes d'entrée/sortie de l'interface 30 sont notées A(IN) et B(OUT) lorsqu'elles sont configurées dans le premier mode de fonctionnement et sont notées A(OUT) et B(IN) lorsqu'elles sont configurées dans le deuxième mode de fonctionnement. On dira aussi que les bornes A(IN) et B(IN) sont configurées en réception et que les bornes A(OUT) et B(OUT) sont configurées en émission.

En référence à la figure 6, et en utilisant la notation ci-dessus, on a représenté schématiquement le système de la figure 2 dans lequel les unités fonctionnelles 11-14 sont équipées d'interfaces PCM configurées de manière à fonctionner comme le système de la figure 2.

En référence à la figure 7, un schéma plus détaillé d'un mode de réalisation possible de l'interface 30 selon l'invention comprend une interface 10 selon l'art antérieur et des moyens additionnels qui vont maintenant être décrits.

Les bornes d'horloge FS et Clk de l'interface 30 sont couplées aux bornes correspondantes de l'interface 10 par des liaisons qui ne sont pas représentées afin de ne pas surcharger le schéma.

Les bornes d'entrée/sortie de données A et B de l'interface 30 sont couplées aux entrées respectives d'un multiplexeur 31 à deux entrées, dont la sortie est couplée à l'entrée de données IN de l'interface 10. Le mutliplexeur 31 est commandé par un signal de commande S1 de telle manière que, dans le premier mode de fonctionnement, le signal reçu sur la borne A de l'interface 30 (c'est-à-dire le signal PCM_Rx) soit transmis sur l'entrée IN de l'interface 10, alors que dans le second mode de fonctionnement, ce soit le signal reçu sur la borne B de cette interface 30 (c'est-à-dire, là aussi, le signal PCM_Rx) qui soit transmis sur l'entrée IN de l'interface 10.

La sortie OUT de l'interface 10, qui délivre le signal PCM_Tx, est couplée à la borne A de l'interface 10 à travers une porte de transmission unidirectionnelle commandée 32, qui est commandée par un signal S2. Cette même sortie OUT de l'interface 10 est également reliée à la borne B de l'interface 30 par l'intermédiaire d'une autre porte commandée de transmission unidirectionnelle, commandée par un signal de commande S3. Les portes 32 et 33 sont adaptées pour éviter que les signaux éventuellement présents sur les bornes A et B de l'interface 30 ne soient transmis sur la sortie OUT de l'interface 10. Les signaux S2 et S3 sont positionnés de telle façon que, dans le premier mode de fonctionnement, le signal PCM_Tx soit transmis sur la borne B de l'interface 30 via la porte 33 alors que, dans le second mode de fonctionnement, il soit transmis à la borne A de l'interface 30 via la porte 32.

La réalisation du multiplexeur 31 et des portes 32 et 33, par exemple en technologie CMOS, ne pose pas de problèmes particuliers à l'Homme du métier.

Dans une mode de réalisation, l'interface 30 comprend en outre une unité de commande 40 pour générer les signaux de commande S1, S2 et S3 en fonction du mode de fonctionnement courant. En variante, l'unité de commande 40 peut être réalisée à l'extérieur de l'interface 30, par exemple dans l'unité fonctionnelle qui intègre cette interface, ou alors dans le système qui intègre cette unité fonctionnelle. Dans ce cas, des moyens de commande générant les signaux de commande S1, S2 et S3 pour les interfaces PCM respective de chacune des unités fonctionnelles comprises dans le système, peuvent être centralisées.

On va maintenant décrire divers cas d'utilisation du système selon la figure 2, dans lequel les interfaces PCM de chacune des unités fonctionnelles 11-14 sont réalisées conformément à la présente invention. Dans tous ces cas d'utilisation la connexion des bornes des interfaces PCM des unités fonctionnelles du système, réalisée via le réseau d'interconnexion, est figée. Néanmoins, grâce au caractère configurable des bornes d'entrée/sortie A et B de ces interfaces, on verra que les cas d'utilisation ne sont pas restreints pour autant.

Dans ces exemples, on considère le cas d'un système correspondant à un appareil portable communiquant (par exemple un téléphone, un ordinateur, un PDA,...), doté de fonctions multimédias, dans lequel:
- l'unité fonctionnelle 11 est un codeur/décodeur audio (codec), couplé à au moins un micro 111 et à au moins un haut-parleur 112;
- l'unité fonctionnelle 12 est un modulateur/démodulateur (modem), assurant l'émission et la réception de signaux de type voix, via un canal de transmission radio, par exemple;
- l'unité fonctionnelle 13 est un contrôleur "Bluetooth" (BTH) assurant l'interface sans fil courte portée avec un dispositif périphérique, tel qu'un casque téléphonique 131 (comprenant des haut-parleurs et au moins un micro) ou un dispositif équivalent; et,
- l'unité fonctionnelle 14 est un microprocesseur (µP) multimédia, via lequel des données audio peuvent être lues ou écrites dans une mémoire externe (MEM) 140, telle qu'un "MicroDrive" ou un mini disque dur, ou une mémoire ou carte mémoire Flash, CompactFlash, SD, MultiMedia (MMC), SmartMedia, TransFlash, ...

Les bornes A des interfaces PCM de toutes ces unités sont reliées ensemble, via le réseau d'interconnexions 20. De même, leurs bornes B sont reliées ensemble via le réseau d'interconnexions 20. Ces connexions sont figées. Elles ne peuvent être modifiées en cours de fonctionnement.

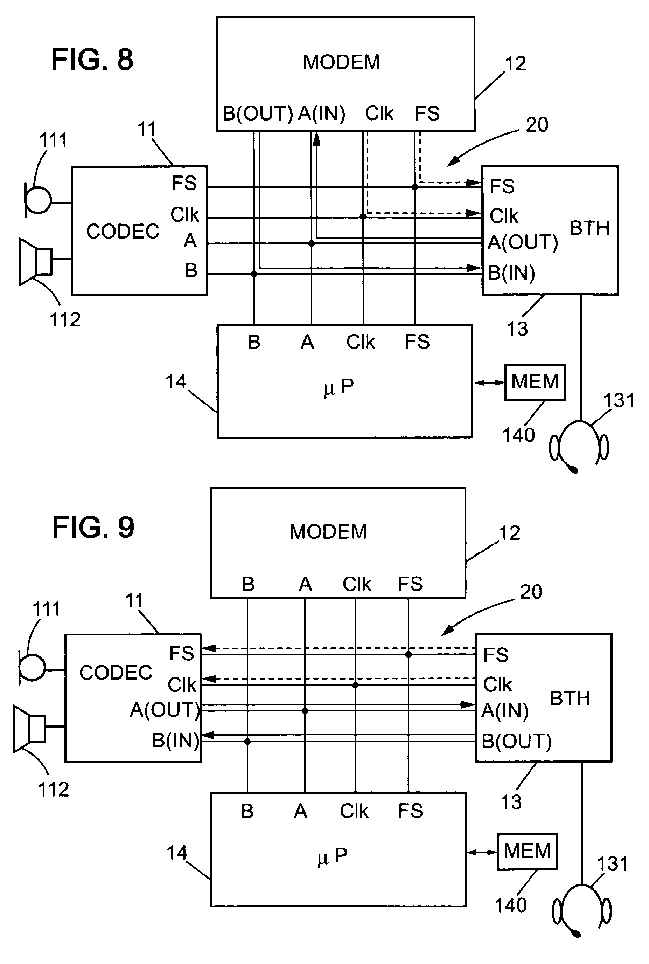

En référence à la figure 8, un premier cas d'utilisation correspond au traitement d'un appel téléphonique ("Voice Call" en anglais) entre le modem 12 et le contrôleur "Bluetooth" 13 lors de l'utilisation, par exemple, d'un casque téléphonique. Le microcontrôleur 14 et le codec 11 ne sont pas utilisés, et peuvent être arrêtés (mis en sommeil, en mode de veille, mode en d'économie, ou similaire).

Dans ce cas, les bornes A et B du modem 12 sont configurées respectivement en réception et en émission, en sorte qu'elles sont respectivement notées A(IN) et B(OUT). A l'inverse, les bornes A et B du contrôleur "Bluetooth" 13 sont configurées respectivement en émission et en réception, en sorte qu'elles sont respectivement notées A(OUT) et B(IN). Les données audio sont échangées simultanément dans les deux sens (flèches en trait continu), c'est-à-dire que la communication de données est réalisée en duplex. On notera que la configuration symétrique des entrées A et B de chacune des unités 12 et 13 est également possible.

On notera aussi que la configuration des bornes A et B des autres unités, ici le codec 11 et le microprocesseur 14, est indifférente. Néanmoins, tout risque de conflit de transmission ou de perturbation des données est évité étant donné que les autres unités n'émettent pas de données.

Etant donné qu'il n'y a que deux unités fonctionnelles qui communiquent via le réseau d'interconnexionn 20, on peut utiliser un format PCM monocanal, c'est-à-dire avec un intervalle de temps par trame PCM (i.e., N=1).

Dans l'exemple, c'est le modem 12 qui est de type maître, c'est-à-dire qu'il transmet les signaux d'horloge CLK_Frame et CLK_Bit au contrôleur "BlueTooth" 13 (flèches en trait discontinu) de type esclave. Mais l'inverse est également possible, indépendamment de la configuration des entrées A et B de chacune des unités 12 et 13. L'unité de type maître pourrait aussi être l'unité 11 ou l'unité 14, mais cela obligerait à maintenir cette unité en activité pour cette seule fonction, ce qui n'est pas idéal, alors qu'elle peut par ailleurs être éteinte.

En référence à la figure 9, un deuxième cas d'utilisation correspond par exemple à la connexion du contrôleur "BlueTooth" 13 au codec 11, par exemple lorsque l'utilisateur utilise son téléphone comme périphérique audio d'une station de jeu. Le microcontrôleur 14 et le modem 12 ne sont pas utilisés.

Dans ce cas, les bornes A et B du contrôleur "BlueTooth" 13 sont par exemple configurées respectivement en réception et en émission, en sorte qu'elles sont respectivement notées A(IN) et B(OUT). A l'inverse, les bornes A et B du codec 11 sont corrélativement configurées respectivement en émission et en réception, et sont donc respectivement notées A(OUT) et B(IN). Les données audio sont échangées simultanément dans les deux sens (flèches en trait continu). Par exemple, c'est le contrôleur "BlueTooth" 13 qui est de type maître, c'est-à-dire qu'il transmet les signaux d'horloge CLK_Frame et CLK_Bit au codec 11 (flèches en trait discontinu) de type esclave.

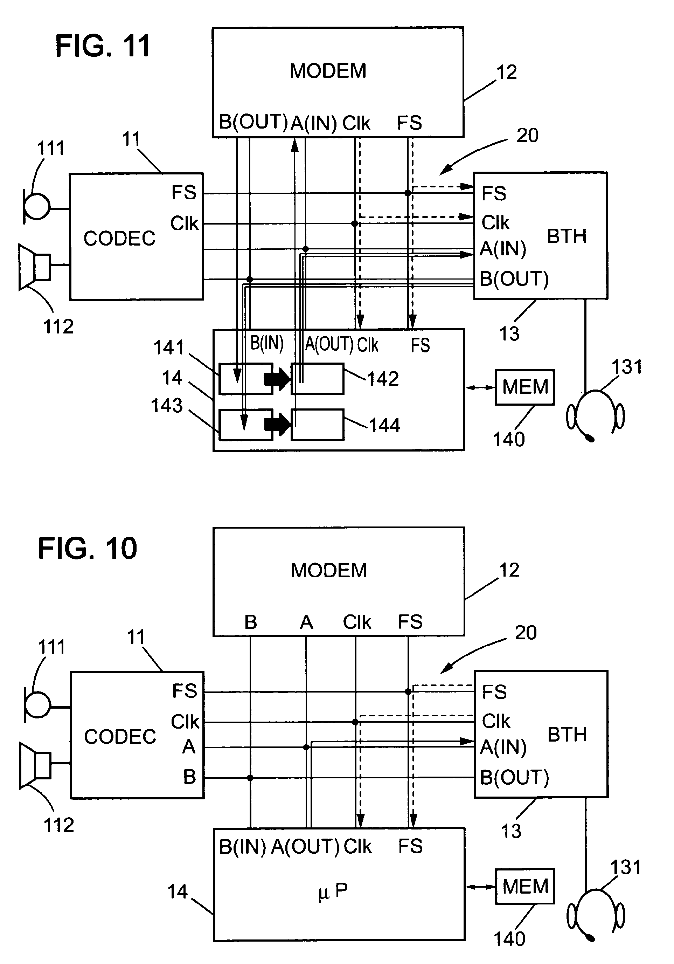

En référence à la figure 10, un troisième cas d'utilisation correspond par exemple au rejeu ("Play Back"), via un casque téléphonique externe, d'une communication préalablement enregistrée dans une mémoire de stockage (non représentée) du téléphone. Dans ce cas d'utilisation, le microprocesseur 14 envoie des données audio au contrôleur "BlueTooth" 13, mais ce dernier ne lui retourne pas de données. Le codec 11 et le modem 12 ne sont pas utilisés.

Dans ce cas, la borne A et B du contrôleur "BlueTooth" 13 sont par exemple configurées respectivement en réception et en émission, en sorte qu'elles sont respectivement notées A(IN) et B(OUT). A l'inverse, les bornes A et B du microprocesseur 14 sont corrélativement configurées respectivement en émission et en réception, et sont donc respectivement notées A(OUT) et B(IN). Les données audio sont transmises uniquement entre les bornes A des unités 14 et 13, depuis le microprocesseur 14 vers le contrôleur "BlueTooth" 13 (flèche en trait continu). La liaison entre les bornes B des unités 13 est 14 est par exemple à l'état haute impédance (HZ). Par exemple, c'est ici le contrôleur "BlueTooth" 13 qui est de type maître, c'est-à-dire qu'il transmet les signaux d'horloge CLK_Frame et CLK_Bit au microprocesseur 14 (flèches en trait discontinu) de type esclave.

En référence à la figure 11, un quatrième cas d'utilisation correspond par exemple à l'enregistrement simultané d'une communication en cours. La communication passe par le modem 12, qui est donc actif. Elle est réalisée par l'utilisateur avec, par exemple, le casque téléphonique externe 131 en sorte que le contrôleur "BlueTooth" 13 est actif. L'enregistrement de la communication dans une mémoire est réalisée par l'intermédiaire du microprocesseur 14, lequel est donc également actif. Seul le codec 11 n'est pas utilisé, et peut être arrêté.

Dans ce cas, la borne A et B du modem 12 sont configurées respectivement en réception et en émission, en sorte qu'elles sont respectivement notées A(IN) et B(OUT). A l'inverse, les bornes A et B du microprocesseur 14 sont configurées respectivement en émission et en réception, en sorte qu'elles sont respectivement notées A(OUT) et B(IN). De plus, les bornes A et B du contrôleur "BlueTooth" 13 sont configurées respectivement en réception et en émission, en sorte qu'elles sont respectivement notées A(IN) et B(OUT).

Dans l'exemple, c'est le modem 12 qui est de type maître, c'est-à-dire qu'il transmet les signaux d'horloge CLK_Frame et CLK_Bit au contrôleur "BlueTooth" 13 (flèches en trait discontinu) et au microprocesseur 14 qui sont de type esclave.

Chaque trame PCM doit ici comprendre au moins deux IT, notée IT1 et IT2 dans la suite. Dit autrement, on est dans un cas où N=2. Le fonctionnement est le suivant.

Pendant l'intervalle de temps IT1, des données audio sont transmises entre les bornes B des unités 12 et 14, depuis le modem 12 vers le microprocesseur 14, et des données audio sont transmises entre leurs bornes A (mode duplex), depuis le microprocesseur 14 vers le modem 12 (flèches en trait continu simple). Dans le microprocesseur, les données reçues du modem 12 sont stockées dans un registre 141, et celles émises vers le modem 12 sont lues dans un autre registre 144.

A la fin de l'intervalle de temps IT1 (c'est-à-dire pendant le dernier cycle du signal d'horloge de synchronisation au niveau bit inclus dans l'intervalle de temps IT1) le contenu du registre 141 est copié dans un autre registre 142, et par ailleurs le contenu d'encore un autre registre 143 est copié dans le registre 144. Le rôle de ces autres registres 142 et 143 va apparaître maintenant. C'est aussi à cet instant, par exemple, que les données respectivement émises et reçues par le microprocesseur 14 sont enregistrées dans la mémoire externe 140 pour utilisation ultérieure.

Pendant l'intervalle de temps IT2, les données audio sont transmises entre les bornes A des unités 14 et 13, depuis le microprocesseur 14 vers le contrôleur "BlueTooth" 13, et des données audio sont transmises entre leurs bornes B (mode duplex), depuis le contrôleur "BlueTooth" 13 vers le microprocesseur 14 (flèches en trait continu double). Dans le microprocesseur, les données émises vers le contrôleur "BlueTooth" 13 sont lues dans le registre 142, et celles reçues du contrôleur "BlueTooth" 13 sont stockées dans le registre 143.

Dit autrement, les données échangées entre le modem 12 et le contrôleur "BlueTooth" 13 dans un sens ou dans l'autre, transitent par une paire de registres respectivement 141,142 ou 143,144. Le contenu de l'un des deux registres de chaque paire est chargé pendant un des deux intervalles de temps IT1 et IT2, est copié dans l'autre registre de la paire sensiblement entre les intervalles de temps IT1 et IT2 (en fait pendant le dernier cycle du signal CLK_Bit à l'intérieur du premier intervalle de temps IT1), et est lu depuis cet autre registre pendant l'intervalle de temps IT2.

Le fait d'utiliser deux intervalles de temps par trame PCM fait qu'aucune latence n'est perceptible par l'utilisateur par rapport au cas de la figure 8. Il faut juste utiliser un signal d'horloge de synchronisation au niveau bit CLK_Bit deux fois plus rapide, car ici N=2.

On notera que, pour des cas d'utilisation plus complexes (en particulier, faisant intervenir les quatre unités fonctionnelles, ou plus encore si le système comprend plus de quatre unités fonctionnelles), il peut être nécessaire d'augmenter le nombre de registres dans le processeur 14. On aura alors besoin d'augmenter le nombre N d'intervalles de temps par trame PCM. Plus particulièrement, on prévoira un premier groupe de N registres (correspondant ici aux registres 141 et 143) et un second groupe de N registres (correspondant ici aux registres 142 et 144) respectivement pour chaque sens de la communication de données (i.e., de ou vers l'unité fonctionnelle concernée). Et on utilisera alors un format PCM avec N intervalles de temps par trame PCM.

Il peut aussi être avantageux de modifier la configuration des bornes A et B d'une unité fonctionnelle donnée, d'un intervalle de temps à un autre, c'est-à-dire entre deux intervalles de temps consécutif d'une même trame PCM ou de deux trames PCM consécutives.

On notera pour finir que, comme il a déjà été dit plus haut, la mise en oeuvre de l'invention est indépendante de la configuration des unités fonctionnelles et de leur interface PCM en maître ou en esclave. Par conséquent, l'interface PCM de tout ou partie des unités fonctionnelles du système peut comprendre un interrupteur de commande du type maître/esclave de l'unité fonctionnelle, lequel est piloté de façon indépendante de la configuration des interfaces PCM.

## Revendications

1. Dispositif d'interface (30) adaptée pour la communication de données en mode duplex et comprenant une première et une seconde bornes de données (A,B), avec en permanence une desdites première et une seconde bornes de données affectée à chaque sens de communication,
**caractérisée en ce que** les première et seconde bornes de données sont configurables en fonctionnement de telle manière que, dans un premier mode de fonctionnement, ladite première borne de données (A) soit adaptée pour émettre (PCM_Tx) mais pas pour recevoir des données et ladite seconde borne de données (B) soit adaptée recevoir (PCM_Rx) mais pas pour émettre des données, alors que, dans un second mode de fonctionnement, ladite première borne de données (A) soit adaptée pour recevoir (PCM_Rx) mais pas pour émettre des données et ladite seconde borne de données (B) soit adaptée pour émettre (PCM_Tx) mais pas pour recevoir des données.

2. Dispositif d'interface selon la revendication 1, dans lequel les données sont reçues ou émises sous forme de trames comprenant chacune une pluralité de canaux logiques (IT1-ITn) multiplexés par AMRT respectivement associés à des intervalles de temps, et dans lequel les première et seconde bornes de données sont configurables avec une agilité suffisante pour passer du premier mode de fonctionnement au second mode de fonctionnement, ou réciproquement, d'un intervalle de temps à un autre.

3. Dispositif d'interface selon la revendication 2, comprenant en outre:
- une borne d'horloge de synchronisation au niveau trame (FS) pour recevoir ou émettre un signal d'horloge de synchronisation au niveau trame (CLK_Frame); et,
- une borne d'horloge de synchronisation au niveau bit (Clk) pour recevoir ou émettre un signal d'horloge de synchronisation au niveau bit (CLK_Bit).

4. Dispositif d'interface selon l'une quelconque des revendications 1 à 3, adapté pour la communication de données au format PCM.

5. Dispositif électronique (14, Figure 11) comprenant une interface selon l'une quelconque des revendications 1 à 4, ainsi qu'un premier groupe de N registres de données (141,143) et un second groupe de N registres de données (142,144), respectivement pour stocker des données reçues de N autres dispositifs électroniques respectifs (11,12,13) et pour stocker des données à émettre vers lesdits N autres dispositifs électroniques respectifs.

6. Dispositif électronique selon la revendication 5, dans lequel l'interface est conforme à l'une quelconque des revendications 2 à 4, et dans lequel les données stockées dans les N registres de données du premier groupe, respectivement du second groupe, sont reçues, respectivement émises, dans N intervalles de temps (IT1-ITn) respectifs d'une trame.

7. Système électronique comprenant une pluralité de dispositifs électroniques selon la revendication 5 ou la revendication 6, couplés entre eux par l'intermédiaire d'un réseau de connexion figé.

8. Téléphone portable comprenant un système électronique selon la revendication 7.

9. Procédé de communication de données en mode duplex, mis en oeuvre au niveau d'un dispositif électronique par l'intermédiaire d'une interface adaptée pour la communication de données en mode duplex et comprenant une première et une seconde bornes de données, avec en permanence une desdites première et une seconde bornes de données affectée à chaque sens de communication,
**caractérisée en ce qu'**il comprend la configuration en fonctionnement des première et seconde bornes de données de telle manière que, dans un premier mode de fonctionnement, ladite première borne de données soit adaptée pour émettre mais pas pour recevoir des données et ladite seconde borne de données soit adaptée recevoir mais pas pour émettre des données, alors que, dans un second mode de fonctionnement, ladite première borne de données soit adaptée pour recevoir mais pas pour émettre des données et ladite seconde borne de données soit adaptée pour émettre mais pas pour recevoir des données.

10. Procédé selon la revendication 9, dans lequel les données sont reçues ou émises sous forme de trames comprenant chacune une pluralité de canaux logiques multiplexés par AMRT respectivement associés à des intervalles de temps, et dans lequel les première et seconde bornes de données sont configurées avec une agilité suffisante pour passer du premier mode de fonctionnement au second mode de fonctionnement, ou réciproquement, d'un intervalle de temps à un autre.

11. Procédé selon la revendication 9 ou la revendication 10, dans lequel des données reçues de N autres dispositifs électroniques sont stockées dans N registres de données (141,143) respectifs d'un premier groupe de registres, et des données à émettre vers lesdits N autres dispositifs électroniques sont stockées dans N registres de données (142,144) respectifs d'un second groupe de registres.

12. Procédé selon les revendications 10 et 11, dans lequel les données reçues, respectivement émises, dans N intervalles de temps (IT1-ITn) respectifs d'une trame, sont stockées dans les N registres de données du premier groupe, respectivement du second groupe.
